# EUROPÄISCHE PATENTSCHRIFT

(11) **EP 2 698 139 B1**
(45) Veröffentlichungstag und Bekanntmachung des Hinweises auf die Patenterteilung: **30.08.2017**
(21) Anmeldenummer: 13178859.8
(22) Anmeldetag: 01.08.2013
(51) Int. Cl.: A61H 3/04

(54) **Gehwagen**
Walking frame
Déambulateur

(30) Priorität: 16.08.2012 DE 202012007865 U
(43) Veröffentlichungstag der Anmeldung: 19.02.2014
(73) Patentinhaber: Wilsdorf, Gerd E., 82140 Olching (DE)
(72) Erfinder: Wilsdorf, Gerd E., 82140 Olching (DE)
(74) Vertreter: Dosterschill, Peter

(56) Entgegenhaltungen:
- WO-A1-03/039430
- WO-A2-2004/047712
- DE-A1-102011 000 021
- DE-U1- 20 101 834
- DE-U1-202004 012 343

## Beschreibung

Die Erfindung betrifft einen Gehwagen nach dem Oberbegriff des Patentanspruchs 1.

Es gibt heute auf dem Markt eine Reihe von Gehwägen ("Rollatoren"), die primär für den Innenraum-Bereich ausgelegt sind. So haben die Räder maximal 200 mm Durchmesser, was zum Überwinden von kleinen Türschwellen in der Regel auch ausreicht.

Jedoch tun sich die Nutzer, die noch genügend Tatendrang haben um auch ihre nähere Umgebung zu entdecken, schwer, einen geeigneten Rollator zu finden, der nicht primär für den Innenraum-Bereich ausgelegt ist. Gerade in älteren Städten besteht der Bodenbelag in der Regel aus holprigem Pflaster. Dafür eignen sich die am Markt befindlichen Rollatoren nicht.

Zum einen ist der Rollwiderstand auf Grund der kleinen Räder groß, zum anderen stören die vom Bodenbelag auf die Hände übertragenen Vibrationen. Das führt bei vielen Nutzern zur Gefühlslosigkeit in den Händen. Dies stellt aber einen eklatanten Sicherheitsmangel dar. Denn wenn der Rollator vom Nutzer nicht mehr gut gehalten werden kann, erhöht dies die Sturzgefahr.

Unter den Rollator-Nutzern gibt es auch eine große Anzahl von Naturfreunden, die trotz Beeinträchtigung ihrer Gehfähigkeit, gern ein Stück in der freien Natur gehen würden. Auch hier stellt sich das Problem beim Überwinden von holprigem Boden und den dadurch ausgelösten Vibrationen. Auch muss der Rollator genügend kippstabil sein, um seinem Nutzer jederzeit ein sicherer Halt zu sein.

Gehwägen sind bekannt aus DE 201 01 834 U1, DE 20 2004 012 522 U1, GB 2 382 534 A, US 2007 / 0 013 158 A1 und WO 03/039430 A1.

Aus DE 20 2011 101 334 U1 ist ein in Figur 10 der vorliegenden Anmeldung dargestellter zusammenklappbarer Gehwagen mit zwei Vorrädern und zwei Hinterrädern bekannt. Je ein Vorderrad ist mit je einem Hinterrad über einen unteren horizontalen Längsholm verbunden. An jedem Längsholm ist jeweils ein vertikaler Holm befestigt, an dessen oberen Ende jeweils ein sich nach hinten erstreckender Griff angebracht ist.

Aus WO 2004/047712 A2 ist ein Gehwagen mit mindestens drei Rädern bekannt.
Der bekannte Gehwagen kann Blattfedern aufweisen.

Aus DE 10 2011 000 021 A1 ist ein Gehwagen bekannt, der ein Chassis mit einer Mehrzahl bogenförmiger Träger aufweist, wobei jeder Träger über jeweils eine plattenförmige Dämpfungseinrichtung mit jeweils einem Rad gleichen Durchmessers verbunden ist. Die bogenförmigen Träger wirken wie eine Blattfeder und führen zu einer Dämpfung.

Aus DE 20 2004 012 343 U1 ist eine bereifte Mobilitätshilfe für gehbehinderte Menschen bekannt, wobei die Räder mit Luft befüllbar sind und wobei Vorderräder einen größeren Durchmesser als Hinterräder aufweisen. Die Vorderräder sind über eine Pendelradaufhängung mit einem Transportraum verbunden.

Der Erfindung liegt die Aufgabe zugrunde, einen Gehwagen der eingangs genannten Art zu schaffen, der durch unebene Böden entstehende Schwingungen stärker dämpft und damit eine sichere Nutzung bietet.

Diese Aufgabe wird durch einen Gehwagen gelöst, der in den Ansprüchen definiert ist.

Die Erfindung zeichnet sich durch eine Mehrzahl von Vorteilen aus.

Eine vorteilhafte Ausführungsform des erfindungsgemäßen Gehwagens weist vier gefederte Räder sowie Blattfedern auf.

Vorderräder des Gehwagens haben einen größeren Durchmesser als Hinterräder des Gehwagens; die Blattfedern weisen jeweils einen Federweg auf, wobei eine erste Blattfeder an einem starren Grundkörper des Gehwagens in einem ersten Einspannpunkt eingespannt ist und ein Hinterrad führt, während eine zweite Blattfeder an einem beweglich gelagerten Grundkörper in einem zweiten Einspannpunkt eingespannt ist und ein Vorderrad führt, wobei der Federweg des Hinterrades größer ist als der Federweg des Vorderrades.
Der erfindungsgemäße Gehwagen dämpft durch unebene Böden entstehende Schwingungen und erzeugt damit ein für den Nutzer angenehmes Fahr- bzw. Rollvorhalten seines Gehwagens auch in Bereichen unebener Böden.

Der erfindungsgemäße Gehwagen zeichnet sich auch durch seine einfache, dabei aber stabile Struktur aus, die ohne horizontale Längsholme auskommt. Dies ist unter anderem mit dem Vorteil einer entsprechenden Gewichtsreduktion verbunden. In diesem Zusammenhang ist darauf hinzuweisen, dass den erfindungsgemäß eingesetzten Blattfedern eine Doppelfunktion zugeordnet ist, nämlich einerseits die Funktion der Führung und andererseits die Funktion der Federung.

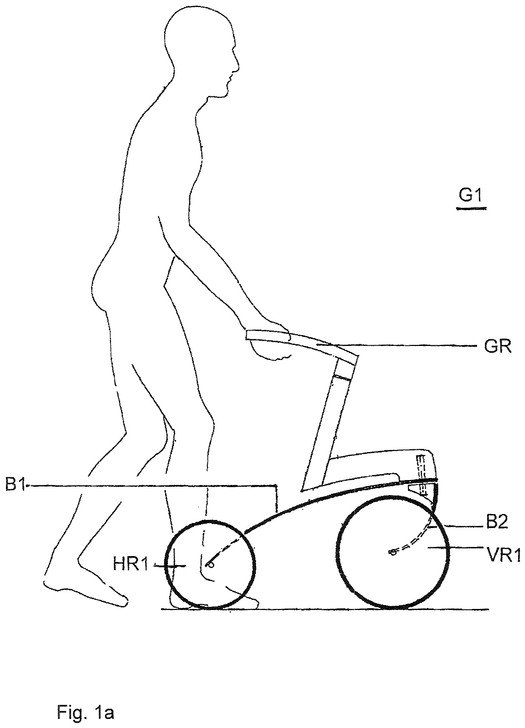

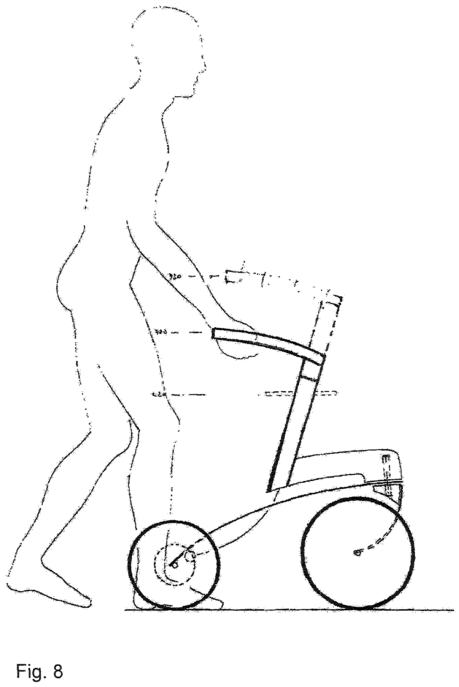

Schließlich ist die ansprechende, formschöne Ausgestaltung des erfindungsgemäßen Gehwagens mit den Blattfedern hervorzuheben, die in den Figuren 1a, 1b, 2, 4, 5a, 5b, 6, 7, 8 und 9 dargestellt ist. Diese Ausgestaltung verleiht dem erfindungsgemäßen Gehwagen eine eigenständige Gestalt mit einem hohen Wiedererkennungswert gegenüber den herkömmlichen Gehwägen.

Eine weitere vorteilhafte Ausführungsform des erfindungsgemäßen Gehwagens ist dadurch gekennzeichnet, dass der erste Einspannpunkt oberhalb des Vorderrades angeordnet ist. Damit wird eine kompakte, geschlossene und zugleich ästhetische Bauweise erzielt.

Eine weitere vorteilhafte Ausführungsform des erfindungsgemäßen Gehwagens ist dadurch gekennzeichnet, dass die erste Blattfeder hinsichtlich einer Seitenansicht eine konvexe Bogenform aufweist und dass die zweite Blattfeder hinsichtlich der Seitenansicht eine konkave Bogenform aufweist. Die erste Blattfeder ist länger als die zweite Blattfeder. Die beiden Blattfedern stellen ein optimiertes Fahrverhalten auf unebener Fahroberfläche sicher.

In vorteilhafter Weise bestehen die Blattfedern insbesondere aus Federstahl und/oder aus Glasfasermaterial. Damit wird nicht nur mechanische Stabilität sondern zugleich auch eine erhebliche Gewichtsreduktion erzielt.

Eine weitere vorteilhafte Ausführungsform des erfindungsgemäßen Gehwagens weist einen Verstellmechanismus aufweist, mit dem eine Federungshärte einer bzw. mehrer Blattfedern einstellbar ist. Der erfindungsgemäße Gehwagen lässt sich damit in vorteilhafter Weise auf unterschiedliche Nutzer, unterschiedliche Nutzerwünsche und/oder unterschiedliche Bodenverhältnisse einstellen.

Eine weitere vorteilhafte Ausführungsform des erfindungsgemäßen Gehwagens ist dadurch gekennzeichnet, dass die Räder aus einem Material eines geringen spezifischen Gewichts, insbesondere aus Kohlefaser und/oder aus Aluminium bestehen. Das geringe Gewicht des Gehwagens erleichtert dem Nutzer die Führung und verlangt ihm damit eine geringere körperliche Anstrengung ab.
In vorteilhafter Weise bestehen Belege der Räder aus einem Weichkunststoff, insbesondere aus einem geschäumten Weichkunststoff, was dank der Abdämmung unerwünschter Schwingungen und dank einer erzielten Gewichtsreduktion ein bequemes Fahrverhalten fördert.

Eine weitere vorteilhafte Ausführungsform des erfindungsgemäßen Gehwagens ist dadurch gekennzeichnet, dass er aus Kohlefaser-Verbundwerkstoffen, aus Aluminium und/oder aus Titan besteht. Die so erzielte Absenkung des Gehwagengewichts kommt dem Nutzer bei der Führung zu gute und beansprucht seinen körperlichen Einsatz in einem entsprechend geringeren Umfang.

Eine weitere vorteilhafte Ausführungsform des erfindungsgemäßen Gehwagens ist dadurch gekennzeichnet, dass Griffstangen elastisch am Gehwagen befestigt sind. Diese dämpfen eventuell noch auftretende Restvibrationen. Damit wird im Ergebnis die bereits durch die Blattfedern erzielte, für den Nutzer angenehme Führung des Gehwagens weiter verstärkt.

Eine weitere vorteilhafte Ausführungsform des erfindungsgemäßen Gehwagens ist dadurch gekennzeichnet, dass er eine Navigationseinrichtung aufweist. Damit wird dem Nutzer und/oder Hilfspersonen die Orientierung ermöglicht bzw. erleichtert.
Eine weitere vorteilhafte Ausführungsform des erfindungsgemäßen Gehwagens ist dadurch gekennzeichnet, dass die Navigationseinrichtung in der Weise ausgestaltet ist, dass sie in Abhängigkeit von Daten, die einen gewünschten Weg bezeichnen, mindestens ein elektrisches Signal generiert, mit dem mindestens ein Vibrationselement aktiviert wird, das einer Griffstange des Gehwagens zugeordnet ist. Der Nutzer erhält damit ein Signal, das ihm die Orientierung erleichtert, vorzugsweise ein taktiles und/oder akustisches Signal, so dass der Nutzer davon entlastet wird, ein optisches Signal zur Kenntnis zu nehmen bzw. für sich umzusetzen.

Vorteilhafte Ausführungsformen der Erfindung werden nun anhand der Zeichnung beschrieben.

Es zeigt
- Figur 1a: eine erste Ausführungsform des Gehwagens gemäß der Erfindung mit zwei Federelementen an der Innenseite des Gehwagens;
- Figur 1b: eine zweite Ausführungsform des Gehwagens gemäß der Erfindung mit zwei Federelementen an der Außenseite des Gehwagens;
- Figur 2: Komponenten des erfindungsgemäßen Gehwagens in Seitenansicht;
- Figur 3: Komponenten des erfindungsgemäßen Gehwagens in Ansicht von hinten;
- Figur 4: einen Gehwagen gemäß der Erfindung mit einer elastischen Anbringung einer Griffstange;
- Figur 5a: einen Gehwagen gemäß der Erfindung mit einer Bremsleiste an der Griffstange;
- Figur 5b: die Funktionsweise der Bremsleiste nach Figur 5a;
- Figur 6: einen Gehwagen gemäß der Erfindung mit einer Navigationseinrichtung,
- Figur 7: einen Gehwagen gemäß der Erfindung mit einem Nutzer in leicht nach vorn geneigter Haltung, z.B. beim Bergaufgehen;
- Figur 8: einen Gehwagen gemäß der Erfindung mit einem Nutzer beim Gehen in der Ebene;
- Figur 9: einen Gehwagen gemäß der Erfindung mit einer Griffstange, die an die Körpergröße des Nutzers angepasst ist; und
- Figur 10: einen Gehwagen nach dem Stand der Technik.

Figur 1a veranschaulicht die Positionierung eines Nutzers zu seinem Gehwagen G1 ("erste Ausführungsform").

Der in Seitenansicht dargestellte Gehwagen G1 hat mindestens drei Räder, von denen ein Vorderrad VR1 und ein Hinterrad HR1 in Figur 1a dargestellt ist. Die Räder sind gefedert; der Gehwagen G1 weist Blattfedern auf, von den eine erste Blattfeder B1 und eine zweite Blattfeder B2 in Figur 1a dargestellt ist. Die Federelemente befinden sich auf der Innenseite des Gehwagens G1, sind also von außen durch die Räder VR1, HR1 teilweise abgedeckt. Die gefederte Befestigung der Räder am Gehwagenkörper bewirkt, dass Schwingungen, die durch Bodenunebenheiten entstehen, nicht beziehungsweise spürbar gedämpft auf den Gehwagen übertragen werden.

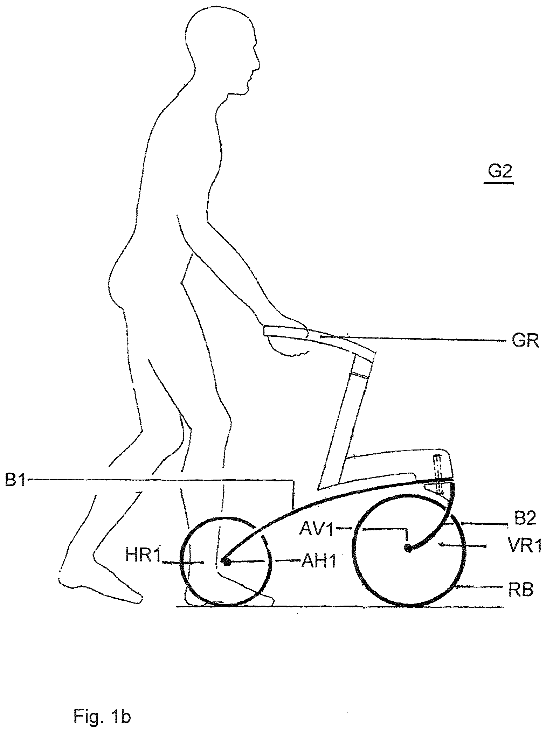

Figur 1b zeigt eine zweite Ausführungsform G2 des Gehwagens, wobei die Funktionsteile wie der ersten Ausführungsform (G1) angeordnet sind; allerdings sind die Federelemente (Blattfeder B1 und B2) an der Außenseite des Gehwagens G2 angebracht und somit von außen uneingeschränkt sichtbar.

Bei den beiden in den Figuren 1a und 1b dargestellten Ausführungsformen G1, G2 des erfindungsgemäßen Gehwagens minimiert die gefederte Befestigung der Räder am Gehwagenkörper ein Übertragen von Schwingungen auf den Nutzer, die durch Bodenunebenheiten ausgelöst werden.

Zugleich wird die ungefederte Masse (Räder HR und VR samt Achsen AH und AV) sehr klein gehalten; hierzu bestehen die Räder vorzugsweise aus ultraleichtem Material, wie Kohlefaser oder Aluminium. Der Radbelag, der zu der Dämpfung unerwünschter Kräfte beiträgt, besteht insbesondere aus einem leichten, geschäumten Weichkunststoff, womit das Gewicht des Rades bzw. der Räder gering gehalten wird.

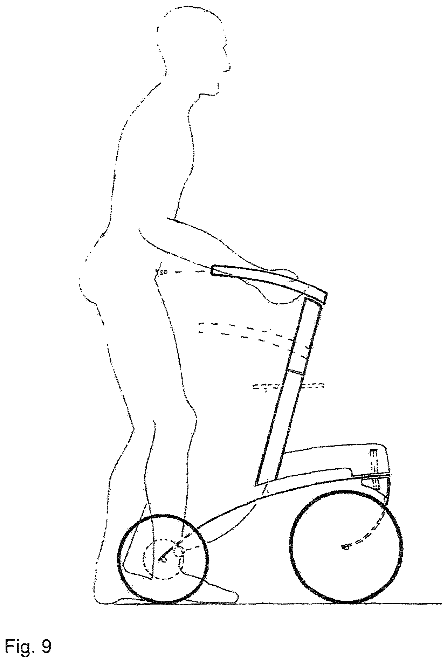

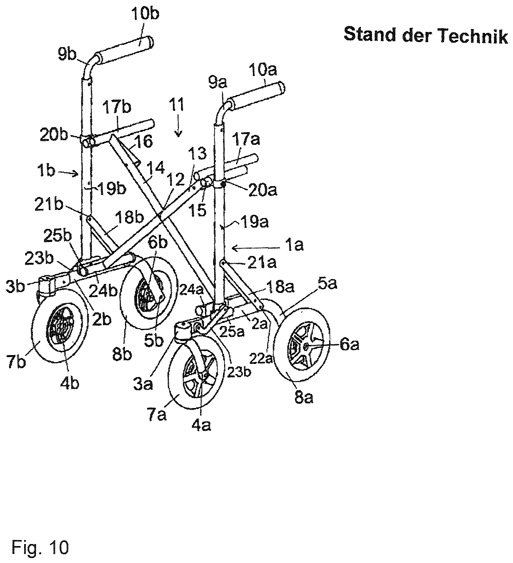

Der Nutzer führt den Gehwagen G1, G2 an je einer Griffstange GR. Diese ist an dem eigentlichen Gehwagen elastisch befestigt. Dies ist für den Nutzer mit dem Vorteil verbunden, dass unerwünschte Schwingungen ("Restvibrationen") des Gehwagens, die beispielsweise durch einen unebenen Bodenbelag ausgelöst werden, weiter gedämpft werden. Wie auch in den Figuren 9, 10 und 11 dargestellt, können die Griffstangen durch eine teleskopartige Verschiebung an die Körpergröße des jeweiligen Nutzers angepasst werden.

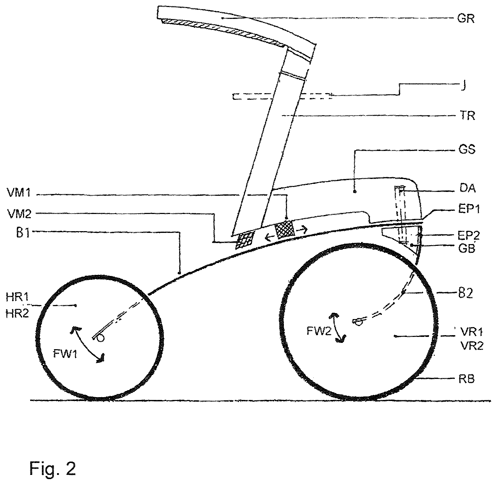

Der in Figur 2 und in den weiteren Figuren dargestellte Gehwagen G1, G2 hat Vorderräder VR1, VR2, die einen größeren Durchmesser als die Hinterräder HR1, HR2 haben.

Der Durchmesser der Vorderräder liegt beispielsweise im Bereich von etwa 320 mm bis 350 mm, während der Durchmesser der Hinterräder beispielsweise im Bereich von etwa 200 mm bis 250 mm liegt. Jedoch können auch Räder mit anderen Durchmessern verwendet werden.

Der bewegliche Grundkörper GB dient zur Befestigung der Blattfeder B2 an einem ("zweiten") Einspannpunkt ESP2, welche das Vorderrad VR1 bzw. VR2 führt.

Die erste Blattfeder B1 ist an einem starren Grundkörper GS des Gehwagens G1, G2 in einem ersten Einspannpunkt EP1 eingespannt und führt das erste Hinterrad HR1.

Eine zweite Blattfeder B2 ist in der Drehachse DA im starren Grundkörper GS drehbar gelagert. An einem beweglich gelagerten Grundkörper GB ist die Blattfeder B2 in dem zweiten Einspannpunkt EP2 eingespannt und führt das Vorderrad VR1. Der Federweg FW1 des ersten Hinterrades HR1 ist größer als der Federweg FW2 des Vorderrades VR1, bedingt durch die unterschiedliche Länge der beiden Blattfedern.

Der erste Einspannpunkt EP1 ist oberhalb des Vorderrades VR1 angeordnet.

Die erste Blattfeder B1 hat hinsichtlich der Seitenansicht in Figur 2 eine konvexe Bogenform, während die zweite Blattfeder B2 hinsichtlich dieser Seitenansicht eine konkave Bogenform hat.

Die erste Blattfeder B1 ist länger als die zweite Blattfeder B2.

Die Blattfedern B1, B2 bestehen aus Federstahl und/oder aus Glasfasermaterial bzw. aus einem anderen elastischen Material.

Der Gehwagen hat einen Verstellmechanismus, mit dem eine Federungshärte einer zugeordneten Blattfeder einstellbar ist. Beispielsweise besteht eine erste Ausführungsform dieses Verstellmechanismus aus einem Element VM1, das im unteren Bereich des Grundkörpers GS horizontal verschoben werden kann. Es liegt auf der Blattfeder B1 auf und verändert den nutzbaren Federweg der Blattfeder B1.

Eine weitere Ausführungsform eines Verstellmechanismus VM2 besteht darin, dass ein Federelement im Inneren des Teleskoprohres TR des Gehwagens untergebracht ist und den Federweg FW1 des Hinterrades HR1 durch einen Anschlag begrenzt, zum Beispiel halbiert.

Die Räder HR1, HR2, VR1 bestehen aus einem Material eines geringen spezifischen Gewichts, insbesondere aus Kohlefaser und/oder aus Aluminium.

Die Belege der Räder HR1, HR2, VR1 bestehen aus einem Weichkunststoff, insbesondere aus einem geschäumten Weichkunststoff.

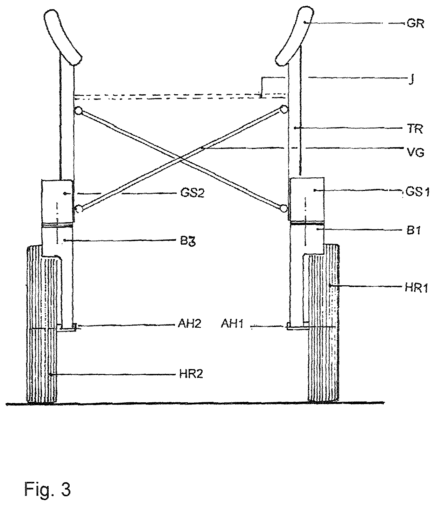

Figur 3 zeigt den Gehwagen von hinten. Die Hinterräder HR1 und HR2 sind mit Blattfedern B1 und B3 geführt. Die Achse AH1 ist an der Blattfeder B1 fixiert und die Achse AH2 an der Blattfeder B3.

Zwischen der linken und der rechten Gehwagenseite ist ein Verbindungsgestell VG angeordnet, das die beiden Gehwagenseiten zueinander fixiert.

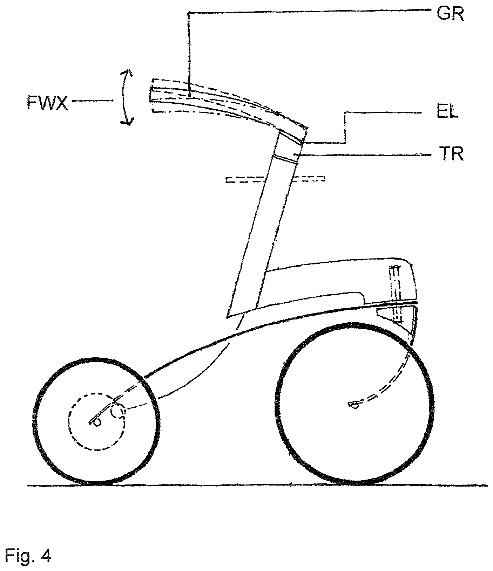

Figur 4 zeigt ein Ausführungsbeispiel einer elastischen Griffstangenbefestigung. Die Griffstange GR ist mittels einer elastischen Komponente EL an einer im Wesentlichen vertikalen Teleskopstange TR des Gehwagens befestigt.

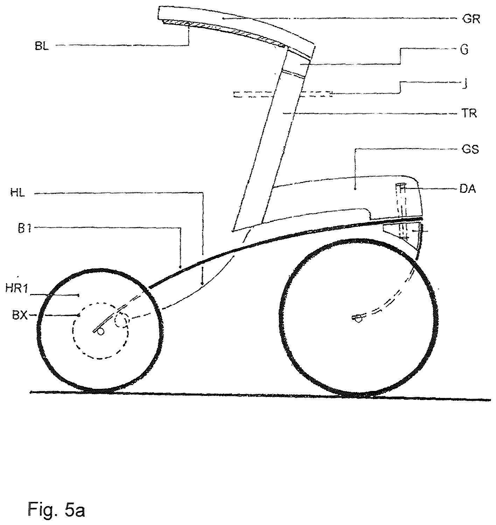

Figur 5a zeigt eine Griffstange GR. In diese Griffstange GR ist von unten ein Element eingelassen, welches als Bremsleiste BL dient. Dieses Element gibt die vom Nutzer aufgebrachte Bremskraft auf eine hydraulische Leitung HL, die die Bremskraft an die Bremsscheiben BX weitergibt, die an den beiden Hinterrädern HR1, HR2 angebracht sind.

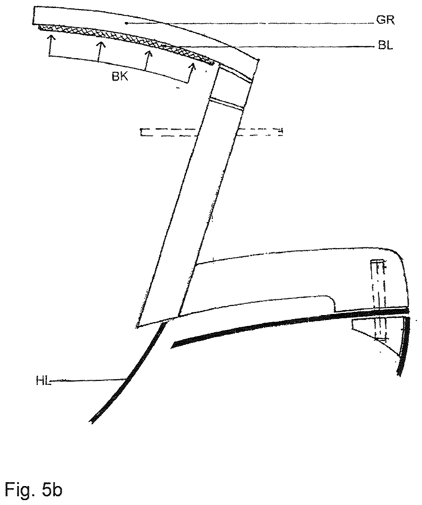

Wie in Figur 5b dargestellt kann der Nutzer seine Bremskraft BK an einer beliebigen Stelle der Bremsleiste BL an der Griffstange GR einbringen. Damit wird sichergestellt, dass der Nutzer in nahezu jeder beliebigen Haltung bremsbereit ist.

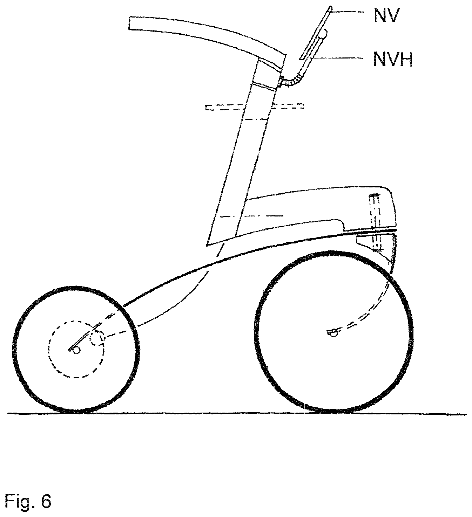

Figur 6 zeigt eine Ausführungsform des Gehwagens mit einer Halteeinrichtung NVH für eine Navigationseinrichtung NV. Diese ist für den Nutzer gut sichtbar.

Als Navigationseinrichtung kann beispielsweise ein sogenanntes Smart-Phone mit Navigationsfunktion verwenden werden. Die Navigationseinrichtung ermöglicht dem Nutzer, sich jederzeit örtlich zu orientieren. Der Nutzer kann stets erkennen, wo er sich befindet und wo sein Wegeziel liegt.

Die Navigationseinrichtung kann in der Weise ausgestaltet sein, dass durch Betätigung einer beispielsweise großflächigen Taste oder Touch-Fläche mit dem Namen "nach Hause" bzw. "home" Pfeilsymbole und/oder Sprache generiert werden, um den Nutzer zu seinem Wegeziel bzw. zu seinem Ausgangspunkt zu führen.

Damit wird auch die Möglichkeit für Hilfspersonen geschaffen, den Nutzer über seinen aktuellen Standort zu informieren bzw. ihn zu seinem Wegeziel/Ausgangspunkt zu führen ("help"-Funktion).

Die Navigationseinrichtung NV ist beispielsweise in der Weise ausgestaltet, dass in Abhängigkeit eines gewünschten Weges bzw. von Daten, die den gewünschten Weg bezeichnen, ein in der Figur nicht dargestelltes Vibrationselement aktiviert wird, das der linken und/oder der rechten Griffstange zugeordnet ist. Insbesondere sind zwei Vibrationselemente in der Weise am Gehwagen, insbesondere an den Griffstangen befestigt, so dass der Nutzer ein Vibrieren im linken oder rechten Vibrationselement spürt. Ein aktiviertes Vibrationselement gibt dem Nutzer ein Signal, in welche Richtung (links oder rechts) er seinen Weg mit dem Gehwagen fortsetzen soll.

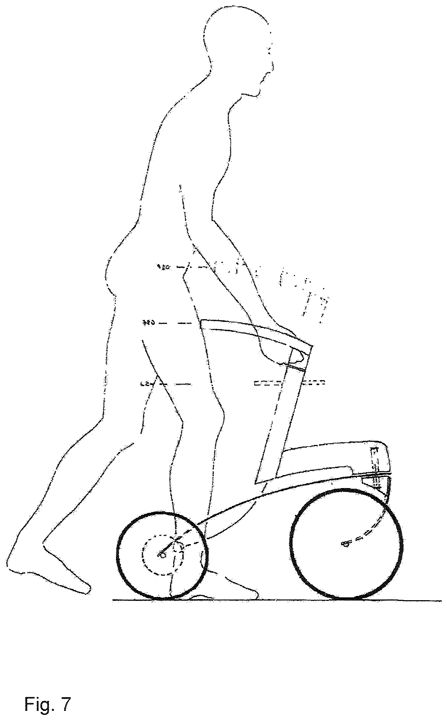

Die Figuren 7, 8 und 9 veranschaulichen, dass der erfindungsgemäße Gehwagen in der Weise ausgestaltet ist, dass der Nutzer diesen in Abhängigkeit unterschiedlicher Fahrsituationen und eigener körperlicher Möglichkeiten greifen und führen kann.

Der Gehwagen besteht vorzugsweise aus sogenannten Leichtbaustoffen, insbesondere aus Kohlefaser-Verbundwerkstoffen, aus Aluminium und/oder aus Titan. Das vergleichsweise geringe Gewicht des Gehwagens versetzt den Benutzer in die Lage, bei Bedarf mit dem Gehwagen auch einige Stufen zu überwinden. Die verwendeten Werkstoffe stellen sicher, dass durch das geringe Gewicht Stabilität des Gehwagens nicht verringert wird.

### Bezugszeichenliste

- G1: Gehwagen, erste Ausführungsform mit innen liegendem Federelement
- G2: Gehwagen, zweite Ausführungsform mit außen liegendem Federelement
- VR1: Erstes Vorderrad
- VR2: Zweites Vorderrad
- HR1: Erstes Hinterrad
- HR2: Zweites Hinterrad
- RB: Radbelag
- AH1: Achse von HR1
- AH2: Achse von HR2
- AV1: Achse von VR1
- AV2: Achse von VR2
- B1: Erste Blattfeder
- B2: Zweite Blattfeder
- B3: Dritte Blattfeder
- FW1: Federweg (von B1bzw. B3)
- FW2: Federweg (von B2)
- GS: Starrer Grundkörper
- GB: Beweglicher Grundkörper
- DA: Drehachse Vorderrad (VR1 bzw. VR2)
- EP1: Erster Einspannpunkt
- EP2: Zweiter Einspannpunkt
- VM1: Verstellmechanismus horizontal
- VM2: Verstellmechanismus im Teleskoprohr
- J: Notsitze
- GR: Griffrohr, Griffstange
- EL: Elastische Komponente
- TR: Teleskoprohr
- VG: Verbindungsgestell
- BL: Bremsleiste
- BK: Bremskraft
- BKO: Bremskolben
- HL: Hydraulik-Leitung
- BX: Bremsscheibe
- NV: Navigationseinrichtung
- NVH: Navigationshalterung
- J: Notsitze
- EM: Elektromotor
- AK: Akkumulator
- GR: Griffrohr, Griffstange
- EL: Elastische Komponente
- TR: Teleskoprohr
- VG: Verbindungsgestell
- BL: Bremsleiste
- BK: Bremskraft
- BKO: Bremskolben
- HL: Hydraulik-Leitung
- BX: Bremsscheibe
- NV: Navigationseinrichtung
- NVH: Navigationshalterung

## Patentansprüche

1. Gehwagen (G1, G2) mit vier Rädern (HR1, HR2, VR1, VR2),
- wobei die Räder (HR1, HR2, VR1, VR2) gefedert sind,
- wobei der Gehwagen (G) Vorderräder (VR1, VR2) und Hinterräder (HR1, HR2) aufweist, und
- wobei die Vorderräder (VR1, VR2) einen größeren Durchmesser als die Hinterräder (HR1, HR2) aufweisen,
**dadurch gekennzeichnet,**
- **dass** der Gehwagen (G1, G2) Blattfedern (B1, B2) aufweist,
- **dass** eine erste Blattfeder (B1) an einem starren Grundkörper (GS) des Gehwagens (G) in einem ersten Einspannpunkt (EP1) eingespannt ist und ein Hinterrad (HR1) führt,
- **dass** eine zweite Blattfeder (B2) an einem beweglich gelagerten Grundkörper (GB) in einem zweiten Einspannpunkt (EP2) eingespannt ist und ein Vorderrad (VR1) führt,
- **dass** die Blattfedern (B1, B2) jeweils einen Federweg (FW1, FW2) aufweisen, und
- **dass** der Federweg eines Hinterrades (HR1) größer ist als der Federweg eines Vorderrades (VR1).

2. Gehwagen nach Anspruch 1, **dadurch gekennzeichnet,**
- **dass** die Blattfedern (B1, B2) an der Innenseite des Gehwagens (G1) oder an der Außenseite des Gehwagens (G2) angeordnet sind.

3. Gehwagen nach einem der vorstehenden Ansprüche, **dadurch gekennzeichnet,**
- **dass** der erste Einspannpunkt (EP1) oberhalb des Vorderrades (VR1) angeordnet ist.

4. Gehwagen nach einem der vorstehenden Ansprüche, **dadurch gekennzeichnet,**
- **dass** die erste Blattfeder (B1) hinsichtlich einer Seitenansicht eine konvexe Bogenform aufweist, und
- **dass** die zweite Blattfeder (B2) hinsichtlich der Seitenansicht eine konkave Bogenform aufweist.

5. Gehwagen nach einem der vorstehenden Ansprüche, **dadurch gekennzeichnet,**
- **dass** die erste Blattfeder (B1) länger als die zweite Blattfeder (B2) ist und dass die Blattfedern (B1, B2) aus Federstahl und/oder aus Glasfasermaterial bestehen.

6. Gehwagen nach einem der vorstehenden Ansprüche, **dadurch gekennzeichnet,**
- **dass** der Gehwagen einen Verstellmechanismus (VM1, VM2) aufweist, mit dem eine Federungshärte der Blattfedern (B1, B2) einstellbar ist.

7. Gehwagen nach einem der vorstehenden Ansprüche, **dadurch gekennzeichnet, dass** er aus Kohlefaser-Verbundwerkstoffen, aus Aluminium und/oder aus Titan besteht.

8. Gehwagen nach einem der vorstehenden Ansprüche, **dadurch gekennzeichnet,**
- **dass** die Räder (HR1, HR2, VR1, VR2) aus Kohlefaser und/oder aus Aluminium bestehen.

9. Gehwagen nach einem der vorstehenden Ansprüche, **dadurch gekennzeichnet,**
- **dass** Beläge (RB) der Räder (HR1, HR2, VR1, VR2) aus einem geschäumten Weichkunststoff bestehen.

## Claims

1. Walking frame (G1, G2) with four wheels (HR1, HR2, VR1, VR2) wherein
- the wheels (HR1, HR2, VR1, VR2) are spring-mounted,
- the walking frame (G) has front wheels (VR1, VR2) and rear wheels (HR1, HR2), and
- the front wheels (VR1, VR2) are of a larger diameter than the rear wheels (HR1, HR2),
**characterised in that**
- the walking frame (G1, G2) has leaf springs (B1, B2),
- a first leaf spring (B1) is clamped in a first clamping point (EP1) on a rigid base unit (GS) of the walking frame (G) and guides a rear wheel (HR1),
- a second leaf spring (B2) is clamped in a second clamping point (EP2) on a flexibly supported base unit (GB) and guides a front wheel (VR1),
- the leaf springs (B1, B2) each have a spring excursion (FW1, FW2), and
- the spring excursion of a rear wheel (HR1) is larger than the spring excursion of a front wheel (VR1).

2. Walking frame according to claim 1, **characterised in that**
- the leaf springs (B1, B2) are arranged at the inner face of the walking frame (G1) or at the outer face of the walking frame (G2).

3. Walking frame according to any one of the preceding claims, **characterised in that**
- the first clamping point (EP1) is arranged above the front wheel (VR1).

4. Walking frame according to any one of the preceding claims, **characterised in that**
- the first leaf spring (B1) has a convex curved shape when regarded from the side, and
- the second leaf spring (B2) has a concave curved shape when regarded from the side.

5. Walking frame according to any one of the preceding claims, **characterised in that**
- the first leaf spring (B1) is longer than the second leaf spring (B2) and **in that** the leaf springs (B1, B2) consist of spring steel and/or of glass fibre material.

6. Walking frame according to any one of the preceding claims, **characterised in that**
- the walking frame has an adjustment mechanism (VM1, VM2) by which means it is possible to adjust a springiness of the leaf springs (B1, B2).

7. Walking frame according to any one of the preceding claims, **characterised in that** it is made of carbon fibre composite materials, of aluminium and/or of titanium.

8. Walking frame according to any one of the preceding claims, **characterised in that**
- the wheels (HR1, HR2, VR1, VR2) are made of carbon fibre and/or of aluminium.

9. Walking frame according to any one of the preceding claims, **characterised in that**
- the surface (RB) of the wheels (HR1, HR2, VR1, VR2) is a foamed, soft plastic.

## Revendications

1. Déambulateur (G1, G2) comportant quatre roues (HR1, HR2, VR1, VR2),
- les roues (HR1, HR2, VR1, VR2) étant suspendues sur ressorts,
- le déambulateur (G) présentant des roues avant (VR1, VR2) et des roues arrière (HR1, HR2, et
- les roues avant (VR1, VR2) présentant un diamètre plus grand que les roues arrière (HR1, HR2),
**caractérisé en ce**
- **que** le déambulateur (G1, G2) présente des ressorts à lames (B1, B2),
- **qu'**un premier ressort à lames (B1) est fixé sur un corps de base (GS) rigide du déambulateur (G) dans un premier point de serrage (EP1) et guide une roue arrière (HR1),
- **qu'**un deuxième ressort à lames (B2) est fixé sur un corps de base (GB) logé de manière mobile, dans un deuxième point de serrage (EP2), et guide une roue avant (VR1),
- **que** les ressorts à lames (B1, B2) présentent respectivement un trajet élastique (FW1, FW2), et
- **que** le trajet élastique d'une roue arrière (HR1) est plus grand que le trajet élastique d'une roue avant (VR1).

2. Déambulateur selon la revendication 1, **caractérisé en ce**
- **que** les ressorts à lames (B1, B2) sont disposés sur le côté intérieur du déambulateur (G1) ou sur le côté extérieur du déambulateur (G2).

3. Déambulateur selon l'une quelconque des revendications précédentes, **caractérisé en ce**
- **que** le premier point de serrage (EP1) est disposé au-dessus de la roue avant (VR1).

4. Déambulateur selon l'une quelconque des revendications précédentes, **caractérisé en ce**
- **que** le premier ressort à lames (B1) présente une forme arquée convexe quant à une vue latérale, et
- en ce que le deuxième ressort à lames (B2) présente une forme arquée concave quant à la vue latérale.

5. Déambulateur selon l'une quelconque des revendications précédentes, **caractérisé en ce**
- **que** le premier ressort à lames (B1) est plus long que le deuxième ressort à lames (B2) et en ce que les ressorts à lames (B1, B2) sont constitués d'acier à ressort et/ou de matière en fibre de verre.

6. Déambulateur selon l'une quelconque des revendications précédentes, **caractérisé en ce**
- **que** le déambulateur présente un mécanisme de réglage (VM1, VM2) à l'aide duquel une dureté de suspension des ressorts à lames (B1, B2) est réglable.

7. Déambulateur selon l'une quelconque des revendications précédentes, **caractérisé en ce qu'**il est constitué de matières composites de fibres de carbone, d'aluminium et/ou de titane.

8. Déambulateur selon l'une quelconque des revendications précédentes, **caractérisé en ce**
- **que** les roues (HR1, HR2, VR1, VR2) sont constituées de fibres de carbone et/ou d'aluminium.

9. Déambulateur selon l'une quelconque des revendications précédentes, **caractérisé en ce**
- **que** les revêtements (RB) des roues (HR1, HR2, VR1, VR2) sont constitués d'une matière plastique souple expansée.
